# EUROPEAN PATENT APPLICATION

(11) **EP 3 466 251 A1**
(43) Date of publication of application: **10.04.2019**
(21) Application number: 16904526.7
(22) Date of filing: 07.06.2016
(51) Int. Cl.: A01G 31/06, A01G 9/02

(54) **HOUSEHOLD HYDROPONICS SYSTEM**

(71) Applicant: Grupo Beme Diseño Integral, S.L., 28600 Navalcarnero (ES)
(72) Inventor: BOUZAS ABAD, Victor Manuel, 28600 Navalcarnero (ES)
(74) Representative: Monzón de la Flor, Luis Miguel
(86) International application number: PCT/ES2016/070427
(87) International publication number: WO 2017/212080

(57) **Abstract**

A domestic hydroponic cultivation system, particularly adapted to be installed in the home. The system is intended for the cultivation of a limited number of plants of reduced height. It is formed principally by a housing or chamber (1) accommodating in its interior at least one removable tray (2) whereon a number of sloping channels or ribbed bags (6) are disposed, whereon the plants to be cultivated are held, and along which the nutrient-bearing water flows; a basin (9) featuring orifices and located below the ribbed bag (6) and disposed for the collection of the water draining from said bag (6); a nutrient-bearing water tank (10) located at the lowest part of the chamber (1), disposed for the collection of the water which drains from the basin (9), and a water recirculation system.

## Description

### Object of the invention

The present invention relates to a domestic hydroponic cultivation system, particularly adapted to be installed in the home, and preferably in kitchen areas. The system is intended for the cultivation of a limited number of plants of reduced height, such as thyme, rosemary, etc.

### Background of the invention

Hydroponics, or hydroponic agriculture, is a method employed for the cultivation of crops using mineral solutions in the place of agricultural soil. The roots receive a balanced nutritional solution dissolved in water, with all the chemical elements essential for the development of the plants, which may grow exclusively in a mineral solution, or in an inert medium such as washed sand, gravel or perlite, among many others.

In the current state of the art, hydroponic systems for the cultivation of crops in allotments or large tracts of land are well known. For example, document ES2359561 A1 relates to an automated system for the hydroponic cultivation of plots of vegetables. A number of hydroponic cultivation systems for domestic use are also known, such as that disclosed in document ES1137332 U, which describes a supporting structure in the form of a table whereon a plurality of plates or channels are disposed, along which nutrient-bearing water flows for the cultivation of the plants.

However, this type of system requires a considerable amount of space for its installation.
The present invention describes a more compact hydroponic cultivation system for domestic use, configured to be located in reduced spaces such as those intended for household appliances, in such a way that the user may easily install it in his kitchen or in another area of the house, without occupying a great deal of space.

### Description of the invention

The domestic hydroponic cultivation system of the present invention is formed by a housing or chamber constituted by a number of lateral walls, a base and a roof. The chamber features in the interior thereof at least one removable tray whereon the plants to be cultivated will be disposed. To this end, the tray is formed by a perimetrical frame featuring a number of cross-members traversing from one side of the frame to the opposite side thereof, and featuring a slight gradient with regard to the horizontal. These cross-members act as a support for a number of channels or ribbed bags, preferably V-shaped, where the plants are held, and along which the nutrient-bearing water flows. The V-shaped ribbed bags feature at their upper part a number of apertures in which the plant is placed, the root or rhizome thereof being disposed towards the interior of the ribbed bag, and the emergent part of the plant projecting from said bag. The apertures also enable the passage of water into the interior of the ribbed bag. The ribbed bags feature one closed extremity and one open extremity for the egress of the water.

The tray also features at least one rod disposed perpendicularly to the cross-members and in close proximity to one of the sides of the frame. This rod thus connecting two opposite sides of the frame acts as a support for the closed extremity of the V-shaped ribbed bag.

The V-shaped ribbed bags feature, as do the cross-members supporting them, a certain gradient towards one of the sides of the chamber, wherein a basin is foreseen for the collection of the water draining therefrom. In turn, the basin features a number of orifices to enable the water to drain into a tank containing nutrient-bearing water, located at the lowest point of the chamber.

The chamber further comprises a water recirculation system consisting of a number of ducts carrying the water driven by a motorised pump from the nutrient-bearing water tank to a number of outlet nozzles at each of the ribbed bags. Due to the gradient of the channels, the water falling thereon at one extremity thereof flows toward the opposite side until it leaves the channel and drains into the corresponding basin.

The walls of the chamber feature orifices to enable the continued circulation of air between the exterior and interior of said chamber. One of the lateral walls comprises a door to provide access to the interior of the chamber.
The chamber features a temperature and humidity sensor and a system for its illumination, preferably located at the roof of the chamber. The illumination system is comprised of one infra-red light and one ultra-violet light, to provide heat and lighting respectively for the plants.

The chamber is especially configured to enable its placement in a kitchen, by way of a household appliance. It shall preferably feature a width of 60cm.

### Description of the drawings

For the purpose of aiding the better understanding of the present invention, the following drawings are included by way of illustration and not limitation:
Figure 1: portrays a frontal view of the system of the present invention.
Figure 2: portrays a perspective view of the system of the present invention.
Figure 3: portrays a schematic view of the structure of the chamber with some of its components.
Figure 4: portrays in detail the closed extremity of the ribbed bags.
Figure 5: portrays in detail the open extremity of the ribbed bags.

### Detailed description of the invention

The system of the present invention is described in detail hereunder, on the basis of the drawings provided.

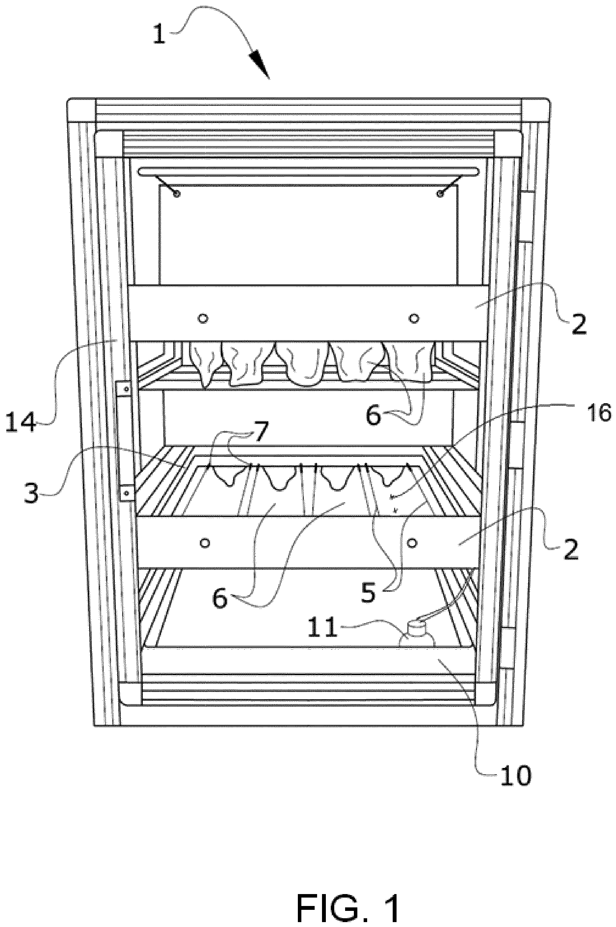

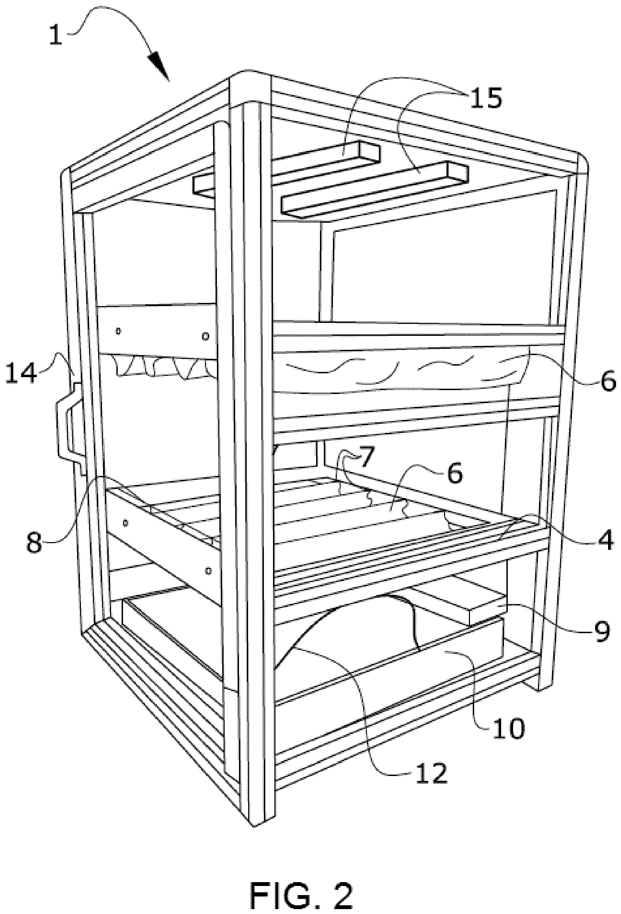

Figures 1 and 2 portray a preferred embodiment of the system of the invention. The system is formed by a chamber (1) whose structure is that of a quadrangular prism. It therefore consists of four lateral walls, a base and a roof.
In its interior, the chamber contains two removable trays (2) which slide along a number of rails (4) attached to the lateral walls of the chamber. These trays are intended for the placement of the plants to be cultivated, and are positioned at different heights within said chamber (1).

The trays (2) are formed by a four-sided perimetrical frame (3) and a number of cross-members (5) connecting two opposite sides of the frame.

These cross-members (5) act as a support for a number of V-shaped channels or ribbed bags (6) made of plastic material, where the plants are held, and along which the nutrient-bearing water flows. The ribbed bags or channels (6) are affixed to the cross-members by means of a number of clips (7). Both the cross-members (5) and the bags (6) disposed thereon feature a slight inclination with regard to the horizontal, an inclination foreseen to facilitate the flow of water from one extremity of the bag (6) to the other extremity.

The bags (6) feature at their upper part a number of apertures (16) into which the plant is placed, the root or rhizome thereof being disposed towards the interior of the ribbed bag, and the emergent part of the plant projecting from the same. The apertures (16) also enable the water which falls thereon to pass into the interior of the bag (6).

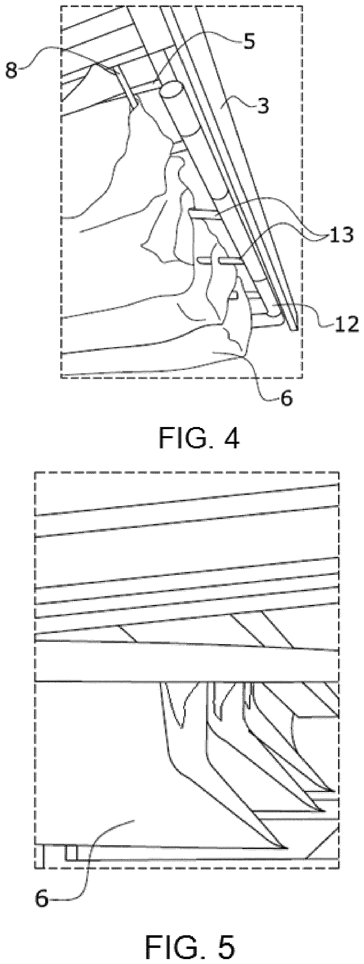

Said bags (6) feature one closed extremity and one open extremity for the egress of the water.
Each tray (2) also features at least one rod (8) disposed perpendicularly to the cross-members (5) and in close proximity to one of the sides of the frame (3). Upon this rod (8) thus connecting two opposite sides of the frame, one extremity of the bag (6) is folded, in such a way that said extremity remains closed (this detail may be viewed in Figure 4).

The ribbed bag (6) features a descending gradient or inclination from its closed extremity to the other extremity, which remains open for the egress of the water. The open extremity features a slanting cut, in such a way that the lower part of the channel features a greater length than the upper part of the same. This detail may be viewed in Figure 5.

Below the open extremity of each ribbed bag (6) there is disposed a basin (9) for the collection of the water that drains from said bag (6). In turn, each basin (9) features a number of orifices in such a way that the water contained therein drains into a nutrient-bearing water tank (10) located at the lowest part of the chamber.

The water, on draining from the extremity of each ribbed bag into the basin (9) and therefrom into the nutrient-bearing water tank (10), becomes oxygenated, this representing a significant advantage for the development and growth of the plants.

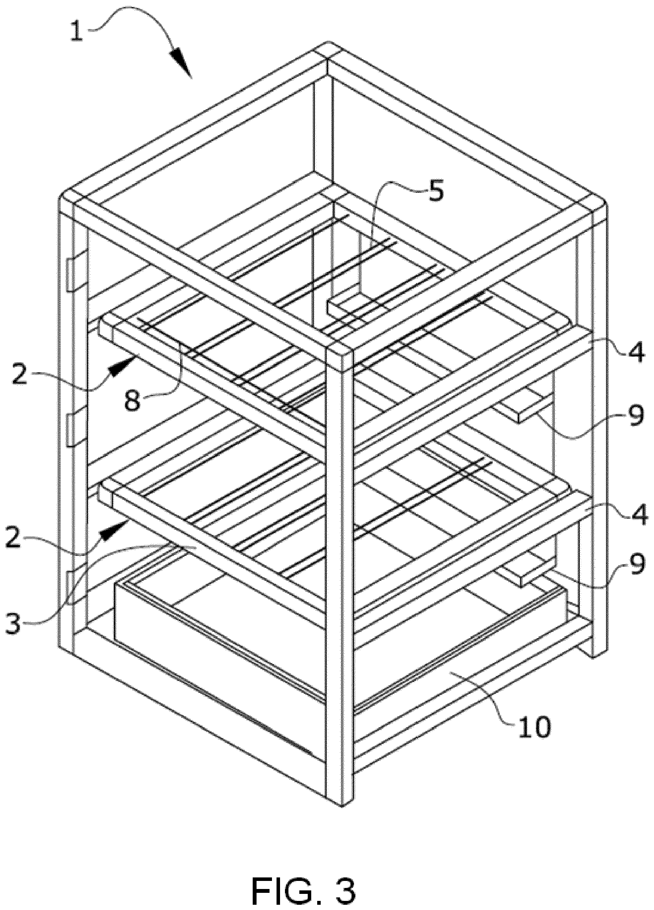

Figure 3 portrays schematically the structure of the chamber, with some of the essential elements. In this figure, the disposition of the different components of the system may be clearly seen.

The chamber (1) further comprises a recirculation system to drive the water from the tank (10) to the ribbed bags (6) through a number of ducts (12) equipped with water outlet nozzles (13). For this purpose, the recirculation system is equipped with a motorised pump (11).

One of the lateral walls of the chamber (1) comprises a door (14) to provide access to the interior of the chamber.

The walls of the chamber (1) feature orifices to enable the continued circulation of air between the exterior and interior of said chamber.

Preferably, the chamber features a temperature and humidity sensor and an illumination system (15), located at the roof of the chamber (1). The illumination system is comprised of an infra-red light and an ultra-violet light, to provide heat and light for the plants.

It is not considered necessary to make this description more extensive for any person skilled in the art to understand the scope of the invention and the advantages to be derived therefrom.

The materials, shape and size of the elements shall be subject to variation, provided that this shall not entail a change in the essentiality of the invention.
The terms in which this specification has been drawn up shall always be interpreted in a broad and non-limitative sense.

## Claims

1. A domestic hydroponic cultivation system, **characterised in that** it comprises a housing or chamber (1) constituted by a number of lateral walls, a base and a roof, and containing therein the following elements:
- at least one removable tray (2) formed by a perimetrical frame (3) and a number of cross-members (5) connecting two opposite sides of the frame (3), in such a way that these cross-members (5) act as a support for a number of channels or ribbed bags (6) wherein the plants to be cultivated are held, and along which the nutrient-bearing water flows, and where both the cross-members (5) and the bags (6) disposed thereon feature a certain inclination with regard to the horizontal;
- a basin (9) featuring a number of orifices, located below the ribbed bag (6) and disposed for the collection of the water draining from said bag (6);
- a nutrient-bearing water tank (10) located at the lowest part of the chamber (1), disposed for the collection of the water draining from the basin (9);
- a water recirculation system comprising a motorised pump (11) to drive the nutrient-bearing water from the tank (10) to the ribbed bags (6) through a number of ducts (12) equipped with water outlet nozzles (13) directed toward each of the ribbed bags (6).

2. A domestic hydroponic cultivation system, according to claim 1, **characterised in that** the channels or ribbed bags (6) are made of plastic material and are V-shaped, comprising at their upper part a number of apertures (16) for the placement of the plant and for the passage of the water, said ribbed bags (6) further featuring one closed extremity and one open extremity for the egress of the water.

3. A domestic hydroponic cultivation system, as claimed in claim 2, **characterised in that** the ribbed bags (6) are affixed to the cross-members (5) by means of a number of clips (7).

4. A domestic hydroponic cultivation system, according to claim 2, **characterised in that** the removable tray (2) features at least one rod (8) disposed perpendicularly to the cross-members (5) and in close proximity to one of the sides of the perimetrical frame (3), in such a way that one extremity of the ribbed bag (6) is folded over said rod (8), said extremity remaining closed.

5. A domestic hydroponic cultivation system, according to claim 1, **characterised in that** one of the walls of the chamber (1) comprises a door (14) to provide access to the interior of the chamber (1).

6. A domestic hydroponic cultivation system, according to in claim 1, **characterised in that** the walls of the chamber (1) feature orifices to enable the continued circulation of air between the exterior and interior of the chamber.

7. A domestic hydroponic cultivation system, according to in claim 1, **characterised in that** it features a temperature and humidity sensor.

8. A domestic hydroponic cultivation system, according to claim 1, **characterised in that** it features an illumination system (15) comprised of one infra-red light and one ultra-violet light.

9. A domestic hydroponic cultivation system, according to claim 1, **characterised in that** it features two removable trays (2) located at different heights within the chamber (1).

10. A domestic hydroponic cultivation system, according to claim 1, **characterised in that** the chamber (1) features a width of 60cm.

11. A domestic hydroponic cultivation system, according to claim 2, **characterised in that** the ribbed bags (6) feature a slanting cut at their open ends, in such a way that the lower part of the ribbed bag features a greater length than the upper part of the same.
